# EUROPEAN PATENT SPECIFICATION

(11) **EP 2 607 193 B1**
(45) Date of publication and mention of the grant of the patent: **01.05.2019**
(21) Application number: 12189038.8
(22) Date of filing: 18.10.2012
(51) Int. Cl.: B60T 7/10, G05G 1/04, B60R 25/08

(54) **Handbrake lever mechanism**
Handbremsenhebelmechanismus
Mécanisme de levier de frein à main

(30) Priority: 19.10.2011 GB 201118008
(43) Date of publication of application: 26.06.2013
(73) Proprietor: Nissan Motor Manufacturing (UK) Ltd., Cranfield Bedfordshire MK43 0DB (GB)
(72) Inventor: Salmasi, Vartan, Cranfield, Bedfordshire MK430DB (GB)

(56) References cited:
- EP-A2- 2 420 419
- WO-A1-2004/056629
- DE-A1- 4 315 059
- GB-A- 2 262 075
- US-A- 5 291 764

## Description

### Technical Field of the Invention

The present invention relates to a handbrake assembly incorporating a security arrangement to prevent unauthorised release of the handbrake; and to a vehicle incorporating such an assembly.

### Background to the Invention

Theft of vehicles is a major problem and motor vehicle manufacturers are increasingly developing security systems to prevent vehicles being stolen, including alarm and engine immobilisation systems. In addition, a number of aftermarket anti-theft devices have been produced that a vehicle owner can use to provide an additional level of security. Such devices include devices that can be affixed to a handbrake lever once the handbrake has been applied to prevent, or at least impede, release of the handbrake.

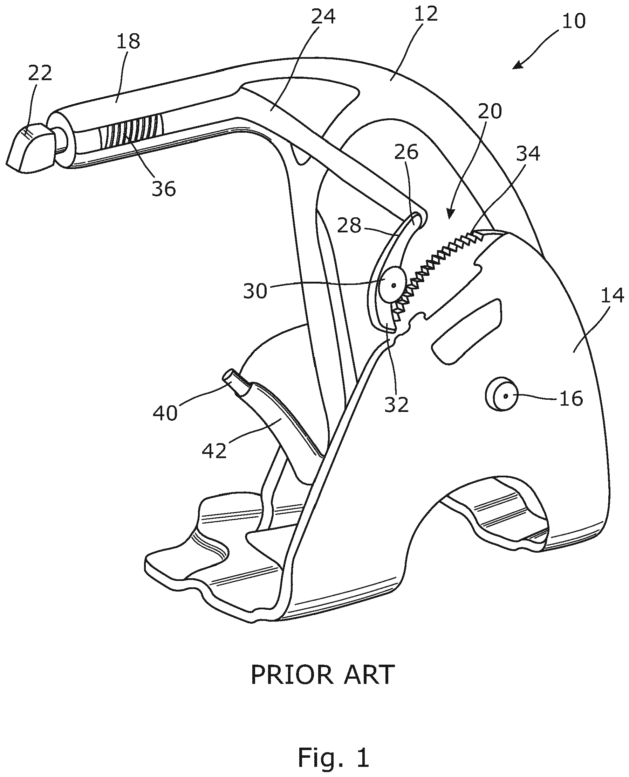

A typical known handbrake assembly 10 is shown in Figure 1, which is a perspective, partly sectioned view of the assembly. The assembly comprises a handbrake lever 12 pivotally mounted to a bracket 14 by means of a pivot pin 16. The bracket 14 is attached to a floor assembly of a vehicle (not shown), usually by welding or being bolted.

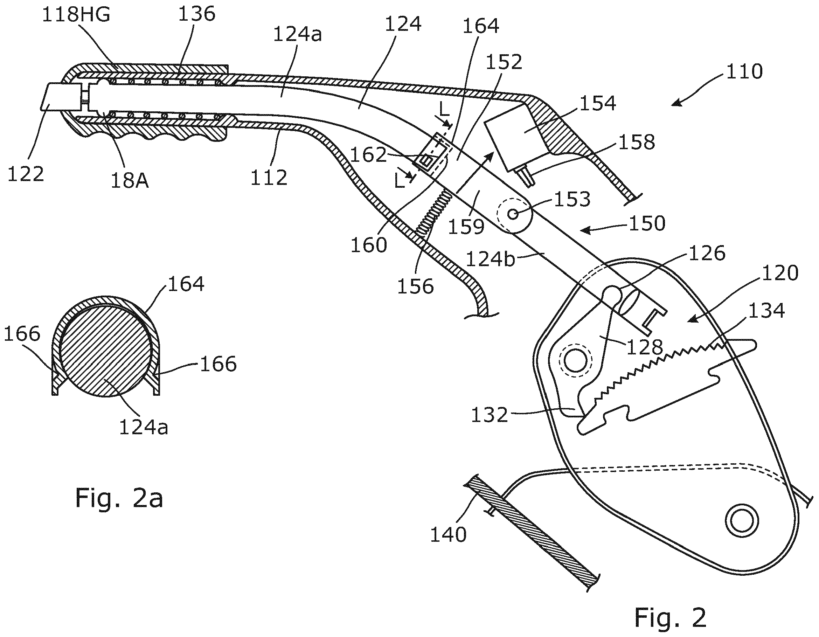

The handbrake lever 12 includes a tubular handgrip portion 18 that can be grasped by a user and pulled upwardly to move the lever from a substantially horizontal brake-off position, as shown in Figures 1 and 2, to an upwardly-angled brake-on position by rotating the lever 12 about the pivot pin 16. The lever 12 is connected with the wheel brakes (not shown) on one axle or end of the vehicle, usually the rear, by means of a cable 40 or other linkage (not shown). Cable 40 is held in a guide 42, and fastened by a nut (not shown). When the handbrake lever 12 is raised to a brake-on position, the cable is tensioned to apply the wheel brakes. A moulded handgrip 118HG having finger grooves on its lower side may be fitted to the outside of the handgrip portion 18 of the lever as illustrated in Figure 2, which shows a handbrake assembly in accordance with the present invention.

The handbrake assembly 10 includes a lock mechanism in the form of a ratchet 20 to releasably hold the lever 12 in a brake-on position. The lock mechanism is released by means of a release button 22 which projects from the end of the handgrip portion 18 and which is depressed to selectively disengage the ratchet 20. Movement of the button is transmitted to the ratchet by means of a pushrod 24, part of which extends through the centre of the handgrip portion 18 of the lever and is connected with the release button 22. The release button 22 may be integral with the pushrod 24 but is often a separate component rigidly fixed to the pushrod so that it can be given a decorative finish, e.g. chrome plating; whereas the pushrod 24 has a plain finish.

The inner end of the pushrod 24 is pivotally connected by means of a ball and socket arrangement 26 with a first end of a locking pawl 28 of the ratchet 20. The pawl 28 is pivotally mounted to the lever 12 by means of a pivot pin 30. A second end of the pawl 28 includes a pawl tooth 32 that cooperates with an array of ratchet teeth 34 mounted to the bracket 14. The pushrod 24, and hence the release button 22, are biased in an outward direction to a position in which the pawl tooth 32 is engaged with the ratchet teeth 34 by means of a coil spring 36 operatively located between abutments on the pushrod and on the handbrake lever respectively. The abutments 18A are not shown in Figure 1, but can be seen in the assembly shown in Figure 2.

To apply the handbrake, button 22 is pushed inwardly against the bias of the spring 36 to move the pushrod 24 inwardly and hence, to pivot the pawl 28 in a clockwise direction (as shown) to disengage the pawl tooth 32 from the ratchet teeth 34. The handgrip portion 18 of the lever 12 is pulled up to tension the handbrake cable, and therefore to apply the wheel brakes. The button 22 is released allowing the pushrod 24 to be moved forwardly by the spring 36, so that the pawl 28 is rotated in the opposite direction to re-engage the pawl tooth 32 with the ratchet teeth 34. When the handbrake lever 12 is released, it will fall slightly until the pawl tooth 32 engages with the nearest tooth in the array of ratchet teeth 34. This prevents the handbrake lever 12 from falling further. As teeth 32 and 34 engage with each other, the handbrake is held on.

The handbrake can also be applied without releasing pawl 28 by simply pulling the handgrip portion 18 up and allowing the pawl tooth 32 to ratchet over the ratchet teeth 34; but this is not recommended. To release the handbrake, lever 12 is raised slightly while depressing the button 22 to release pawl tooth 32 from the ratchet teeth 34. The lever 12 can then be lowered whilst holding the button 22 in, allowing the handbrake cable to de-tension, and thus to release the wheel brakes. The use of a ratchet 20 as part of the locking arrangement allows the handbrake lever 12 to be held in any one of a range of positions to compensate for wear in the brake linings and stretching of the brake cable, which may result in the brake-on position varying over time.

Known handbrake lever anti-theft devices are typically designed to be fitted over the handgrip portion 18 of the handbrake lever to prevent access to the release button 22, so that the handbrake cannot be released without first removing the device. Whilst these devices can be effective in deterring thieves, they rely on the user applying them each time the vehicle is to be left unattended. This may not always be done, as devices of this nature are often difficult and time consuming to affix and remove, meaning that a user may be disinclined to apply them. This is particularly so when the vehicle is being left for only a short time.

Furthermore, because they are fitted externally over a handbrake lever, the known handbrake anti-theft devices are visible and accessible; and so can be removed by a determined thief. Furthermore, known aftermarket handbrake locks are bulky and heavy; so they are awkward to store when not in use. They are often too big to be stored in the front seat area; and if all of the seats of the vehicle are in use, they may have to be stored in a luggage compartment. This discourages use when the vehicle is parked, and may cause damage to other items stored in the luggage compartment.

GB2,262,075A discloses a handbrake anti-theft device with a key operated lock on top of the lever, which is clearly visible to a thief. WO2004/056,629A1 discloses a handbrake anti-theft device which drives a locking pin into the release mechanism from the underside of the lever. This device is easily detected by a thief.

There is a need then to provide a handbrake lever assembly with a built-in security arrangement that overcomes, or at least mitigates, the drawbacks of the known handbrake locking anti-theft devices.

### Summary of the Invention

According to a first aspect of the invention, there is provided a handbrake assembly in accordance with claim 1.

Further optional features of the handbrake assembly according to the first aspect of the invention are set out in the claims dependent on claim 1.

According to a second aspect of the invention, there is provided a vehicle in accordance with claim 14.

Further optional features of the vehicle according to the second aspect of the invention are set out in claim 15.

### Detailed Description of the Invention

In order that the invention may be more clearly understood, two embodiments thereof will now be described, by way of example only, with reference to the remaining accompanying drawings, of which:
Figure 2 is a longitudinal sectional view through part of a handbrake lever assembly according to a first embodiment of the invention, in a "vehicle operating" mode, with the handbrake off.
Figure 2a is an enlarged lateral sectional view of a pushrod assembly forming part of the handbrake lever assembly of Figure 2 taken along line L-L in Figure 2;
Figure 3 is a sectional view similar to that of Figure 2, but showing the handbrake lever assembly in a "vehicle secure" mode, with the handbrake applied.
Figure 4 is a sectional view of a handbrake lever assembly according to a second embodiment of the invention, in a "vehicle operating" mode, with the handbrake off;
Figure 5 is an enlarged longitudinal sectional view through part of the handbrake lever assembly of Figure 4;
Figure 6a is an end view of a coupling member forming part of the handbrake lever assembly of Figure 4, taken at line A-A in Figure 5; and
Figure 6b is an end view of a lower pushrod assembly forming part of the handbrake lever assembly of Figure 4, taken at line B-B in Figure 5.

Reference will be made initially to Figures 2 to 3 which illustrate a first embodiment of a handbrake lever assembly 110 in accordance with the invention. In the following description, the same reference numerals but increased by 100 will be used to identify components of the first embodiment that are the same, or which serve the same function, as those described above in relation to the known handbrake assembly 10.

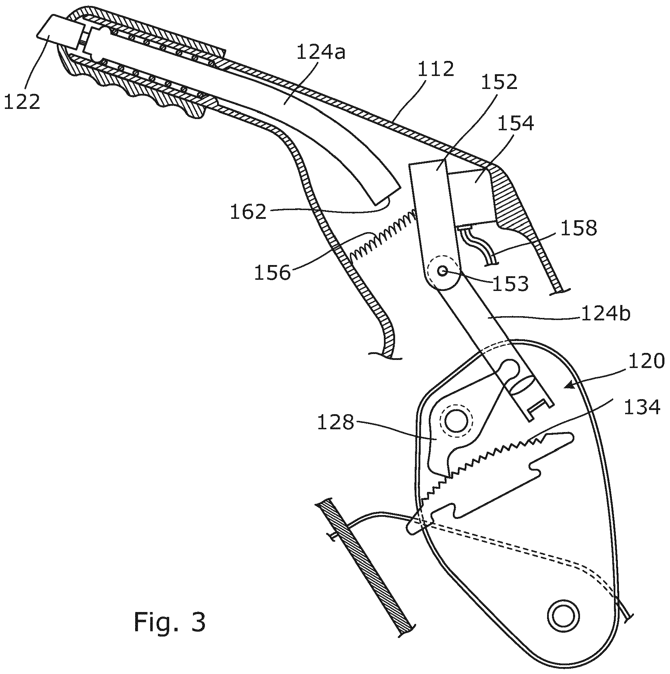

The construction and operation of the handbrake assembly 110 is similar to that of the known handbrake assembly 10 described above; so only the differences will be described in detail. It should also be noted that only key features of the handbrake assembly 110 are shown in Figures 2 and 3 and that some components, such as the mounting bracket 14, have been omitted for reasons of clarity. Unless expressly stated, it should be assumed that all the features described above in relation to the known handbrake assembly 10 shown in Figure 1 are also present in handbrake assembly 110.

In accordance with the present invention, the handbrake assembly 110 includes a system 150 for selectively disabling the handbrake lock release mechanism to place the vehicle in a "vehicle secure" mode.

As part of the disabling system 150, the pushrod 124 is formed in two sections: a first section 124a operatively connected with the release button 122, and a second section 124b connected with the pawl 128 through a ball joint 126. An arrangement for coupling the two sections of pushrod includes a coupling member 152 located between the first and second sections. The coupling member 152 is pivotally mounted to the second section 124b by means of a pivot pin 153 for movement between an operative or coupled position, as shown in Figure 2; and an inoperative or de-coupled position, as shown in Figure 3. When the coupling member 152 is in the operative position, it transmits inward movement of the first section 124a when the release button 122 is depressed to the second section 124b, to disengage the locking pawl 128 from the ratchet teeth 134 in the usual manner.

However, when the coupling member 152 is moved to the inoperative position shown in Figure 3, inward movement of the first section 124a of the pushrod is not transmitted to the second section 124b, so that the pawl 128 cannot be disengaged and the handbrake cannot be released. Release button 122 can be operated as usual, but the handbrake cannot be released. This has two advantages in deterring at least an inexperienced car thief: he might think that the handbrake is defective; and unlike a handbrake lock which locks the button, there is no temptation to force the lock, damaging the vehicle.

Movement of the coupling member 152 between its operative and inoperative positions is controlled by means of a solenoid 154 and a tension spring 156. The tension spring 156 is connected between the hand brake lever 112, or a housing surrounding a part of the lever, and the coupling member 152 on one side; and biases the coupling member 152 into the operative position. The solenoid 154 is mounted inside the hand brake lever 112, or a housing surrounding a part of the lever, on the opposite side from the tension spring 156. The solenoid can be magnetized by an electric current to draw the coupling member 152 to the inoperative position against the bias force of the spring 156. The solenoid is connected by means of wires 158 with an electronic control system of the vehicle (not shown). The control system may include sensor means for detecting when the handbrake is applied, as is known in the art.

The control system is configured to activate the solenoid to move the coupling member 152 to the inoperative position to place the handbrake assembly in a "vehicle secure" mode in response to a pre-determined set of conditions being met and/or an input signal from a user input device. The pre-determined conditions can vary according to requirements; but it is expected that the control system will be configured to place the handbrake assembly in the "vehicle secure" mode only when the handbrake is detected as being on, and when the vehicle ignition is turned-off.

However, in some applications, the control system may be configured to place the handbrake assembly in the "vehicle secure" mode when the handbrake is on, the ignition is off and when the vehicle doors are locked, say by means of a central locking arrangement which may be part of a so called "keyless" entry system. The control system may be configured to place the handbrake lever in a "vehicle secure" mode automatically when the pre-determined conditions are met or only in response to an input signal, provided that at least some of the above mentioned conditions are also met. Such an input signal might be provided by means of a remote device carried by an authorised user and which transmits a signal in response to a user input, such as pressing a button. The remote device may be a key fob or keyless entry device, for example.

The control system is configured to deactivate the solenoid 154 so that the coupling member 152 is returned to the operative position to allow the handbrake assembly to be returned to a "vehicle operating" mode in which the handbrake can be released in response to a further set of conditions being met. This might be in response to the vehicle doors being unlocked by an authorised key or keyless entry device; and/or in response to the ignition being turned on, again by means of an authorised key or keyless entry device being detected. The control system may place the handbrake lever in a "vehicle operating" mode automatically when the further set of conditions is met; or it may require a further input signal.

It will be appreciated that the precise logic for activating and deactivating the disabling system 150 can be varied in numerous ways, and that the examples discussed above should not be regarded as limiting.

The coupling member 152 includes a main body portion 159 (Fig. 2) having an abutment 160 on an outer end that locates adjacent an inner end 162 of the first section 124a when in the operative position; and against which the inner end 162 of the first section 124a abuts when it is moved inwardly as the release button 122 is depressed. The coupling member 152 also has an arcuate shroud portion (164, Fig. 2a) which partially surrounds the inner end region of the first section 124a when the coupling member is in the operative position. The shroud portion 164 may be sprung and has pressed sections 166 which grip the inner end of the first section to minimize vibration and noise during vehicle operation. The shroud portion 164 may also be configured to transmit outward motion of the first section 124a caused by the spring 136 to the second section 124b so that the ratchet pawl 128 is re-engaged with the ratchet teeth 134 when the button 122 is released.

Alternatively, a further bias means may be provided to move the pawl 128 to the engaged position and to maintain the coupling member 152 in close proximity with the first section 124a when the button 122 is released. For example, the further bias means could be a spring connected between the bracket 14 and one of the pawl 128, the second section 124b, and the coupling member 152.

Whilst use of a solenoid to magnetically attract the coupling member 152 of the pushrod is a simple and effective arrangement which is failsafe, it will be appreciated that other actuator arrangements could be used to move the coupling member 152 between its operative and inoperative positions. For example, a double acting electronic linear actuator could be used to move the coupling member. This may be advantageous in not requiring the actuator to be powered continuously to hold the coupling member in the inoperative position. It will also be appreciated that the coupling member 152 could be pivotally connected with the first section 124a of the pushrod, rather than with the second section 124b as shown, if desired.

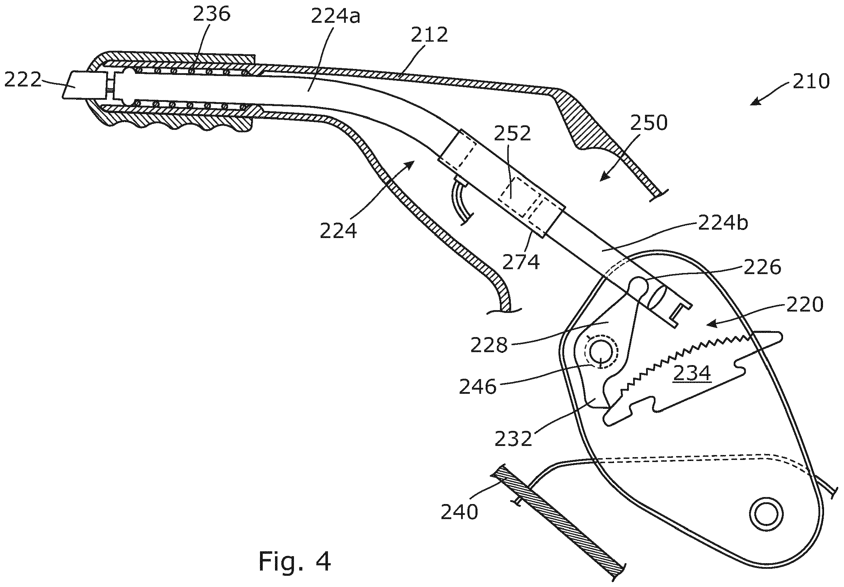

Figures 4 to 6 illustrate a second embodiment of a handbrake lever assembly 210, which has an alternative arrangement for selectively coupling and de-coupling movement of the release button from the pawl; which is more compact than that of the first embodiment. In the following description, the same reference numerals but increased by 200 will be used to identify components of the second embodiment that are the same, or which serve the same function, as those described above in relation to the known handbrake assembly 10; and the same reference numerals but increased by 100 will be used to identify components of the second embodiment that are the same, or which serve the same function, as those described above in relation to the first embodiment.

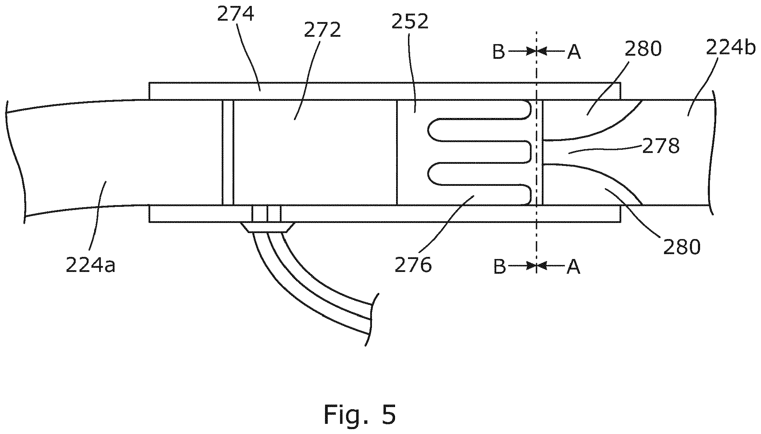

The construction and operation of the handbrake assembly 210 is similar to that of the known handbrake assembly 10 described above; so only the differences will be described in detail. It should also be noted that only key features of the handbrake assembly 210 are shown in Figures 4 and 5 and that some components, such as the mounting bracket, have been omitted for reasons of clarity. Unless expressly stated, it should be assumed that all the features described above in relation to the known handbrake assembly 10 shown in Figure 1 are also present in handbrake assembly 210.

The handbrake assembly in accordance with the second embodiment has a handbrake lock release mechanism disabling system 250 for selectively mechanically decoupling the release button 222 from the locking pawl 228. In this embodiment, the push rod also comprises two sections: a first section 224a operatively connected with the release button 222, and a second section 224b connected with pawl 228 through a ball joint 226.

An alternative arrangement for coupling the pushrod sections is located between the first and second sections 224a, 224b. The alternative coupling arrangement comprises a rotatable coupling member 252 keyed to an output shaft of a stepper motor 272 (shown in Figure 5) for rotation by the motor between operative and inoperative positions under control of a control system (not shown). The motor 272 and coupling member 252 are mounted in a sleeve 274 which overlaps and is non-movably secured to an inner end of the first section 224a of the pushrod so that the stepper motor 272 and the coupling member 252 are constrained to move inwardly and outwardly with the first section 224a when the release button 222 is depressed and released. The sleeve 274 also overlies an outer end of the second section 224b of the pushrod with a close but sliding fit so that the sleeve 274, together with the motor 272 and coupling member 252 can move inwardly and outwardly relative to the second section 224b.

An inner end face of coupling member 252 and the opposing outer end face of the second section 224b of the pushrod have corresponding abutment formations 276, 278 respectively. The abutment formations 276, 278 are configured so that in at least one rotational orientation of the coupling member 252 they engage to transmit inward movement of the first pushrod section 224a to the second pushrod section 224b to enable release of the locking pawl 228, and thus the handbrake, in the usual manner; and so that in at least one other rotational orientation they do not engage, so that inward movement of the first pushrod section 224a is not transmitted to the second pushrod section 224b, and release of the pawl 228 and thus of the handbrake are prevented.

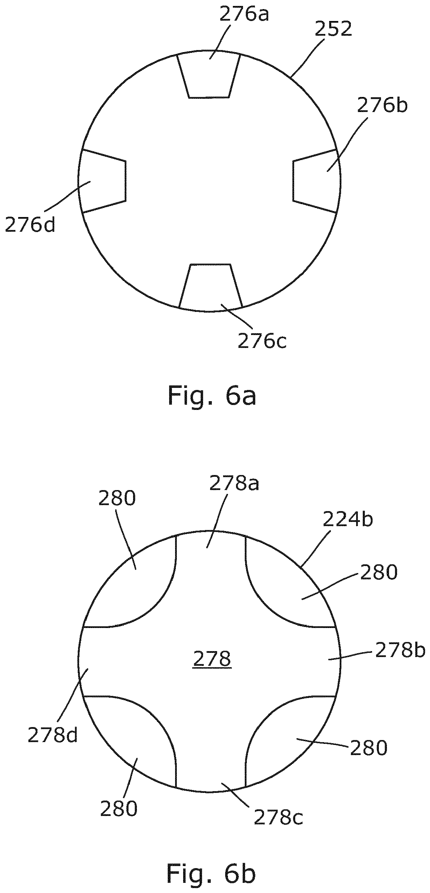

The abutment formations 276, 278 are shown in Figures 6a and 6b respectively. The coupling member 252 has a circular cross section corresponding approximately in diameter with that of the pushrod 224. Four coupling members 276a-276d are provided on the inner end face of the coupling member proximal to its outer diameter and substantially equi-spaced at 90 degree intervals. The coupling members 276 have a depth, which is slightly greater than the maximum range of inward movement of the first pushrod section 224a when the release button 222 is depressed. The outer end face of the second pushrod section 224b has a central, generally cross shaped coupling member 278 having four arm portions 278a-278d which extend to the outer diameter of the second section. The arm portions 278a-278d are substantially equi-spaced at 90 degree intervals and have a depth which is also slightly greater than the range of inward movement of the first section 224a when the release button 222 is depressed. A groove 280 is defined between each adjacent pair of arm portions 278a-278d.

The coupling member 252 can be rotated by the stepper motor 272, under control of the control system, between operative positions in which its coupling members 276a-276d align with the arm portions 278a-278d on the second pushrod section 224b; and inoperative positions in which its coupling members 276a-276d are aligned with and can enter the grooves 280 defined between each pair of adjacent arm portions 278. The arrangement can be configured so that the stepper motor 272 reverses direction to move the coupling member 252 between the operative and inoperative positions; or it may be configured so that the stepper motor rotates the coupling member 252 in one direction only to increment between operative and inoperative positions. In the present embodiment, the coupling member is rotated through 45° to move between operative and inoperative positions.

It will be appreciated that other abutment arrangements can be used, provided that the corresponding abutment formations can be brought into and out of alignment by rotating the coupling member 252 between operative and inoperative positions. For example, provided the corresponding abutment formations are equi-spaced about a common pitch circle diameter on each of the opposed end faces, they can be brought into and out of engagement by rotating the coupling member. Recesses will usually be defined in each of the opposed end faces between adjacent pairs of abutments for receiving the abutments on the other opposed end face when the coupling member is in an inoperative position and the first section is moved in response to the release button being depressed. It will also be appreciated that the coupling member 252 could be mounted to the second section 224b of the pushrod and suitable abutment formations 278a-278d provided on the inner end of the first section 224a.

Movement of the coupling member 252 between operative and inoperative positions is controlled by an electronic control system in accordance with a predetermined logic sequence as discussed above in relation to the first embodiment. In this embodiment, a further bias means such as a spiral spring (246, Fig. 4) is provided in addition to the spring 236 to bias the locking pawl 228 to the engaged position; and to bias the second section 224b of the pushrod outwardly, so that its outer end closely follows the outward movement of the first section 224a and the coupling member 252 when button 222 is released.

Whilst the invention has been described in relation to hand brake assemblies having a ratchet mechanism for locking the handbrake lever in the brake-on position, it will be appreciated that the invention can be adapted for use with handbrake assemblies that use alternative lock mechanisms that are mechanically released by depressing a release button whose movement is transmitted to the lock mechanism by means of a pushrod or other linkage. This can be achieved by incorporating in the linkage a coupling arrangement comprising a coupling member movable between operative and inoperative positions, and an actuator for moving the coupling member to selectively couple and decouple the release button and the lock mechanism.

The above embodiments are described by way of example only. Many variations are possible without departing from the scope of the invention as defined in the appended claims.

## Claims

1. A handbrake assembly (110, 210) comprising a handbrake lever (112, 212) mounted to a bracket (14) for pivotal movement between brake-off and brake-on positions, a lock mechanism (120, 220) for releasably holding the handbrake lever in a brake-on position, a release button (122, 222) mounted to the lever and a linkage (124, 224) for transmitting movement of the button when it is depressed to the lock mechanism to cause the lock mechanism to be released;
wherein the linkage includes a coupling arrangement including a coupling member (152, 252) movable between an operative position in which movement of the release button (122, 222) is transmitted to the lock mechanism (120, 220) and an inoperative position in which movement of the release button is not transmitted to the lock mechanism;
the assembly having an actuator (154, 272) for moving the coupling member (152, 252) between the operative and inoperative positions;
**characterized in that**:
the linkage (124, 224) comprises a first part (124a, 224a) and a second part (124b, 224b), which first part and second part are mechanically coupled in the operative position of the coupling member (152, 252), but are mechanically decoupled in the inoperative position of the coupling member (152, 252).

2. A handbrake assembly (110, 210) as claimed in claim 1, wherein the release button (122, 222) is movable when the coupling member (152, 252) is in its inoperative position.

3. A handbrake assembly (110, 210) as claimed in claim 1 or claim 2, wherein the movement of the release button (122, 222) is transmitted to the lock mechanism (120,220) through the coupling member (152, 252) when said coupling member is in its operative position.

4. A handbrake assembly (110, 210) as claimed in any preceding claim, wherein the linkage (124, 224) comprises a pushrod (124a, 124b, 224a, 224b) mechanically connecting the release button (122, 222) and the lock mechanism (120, 220), wherein the pushrod comprises a first section (124a, 224a) connected with the release button (122, 222) and a second section (124b, 224b) operatively connected with the lock mechanism (120, 220)

5. A handbrake assembly (110) as claimed in claim 4, wherein the coupling member (152) is connected to one of the first (124a) and second (124b) sections of the pushrod for pivotal movement relative to said one of the first (124a) and second (124b) sections between operative and inoperative positions.

6. A handbrake assembly (110) as claimed in claim 5, wherein the coupling member (152) has an abutment (160) configured so that when the coupling member is in the operative position, the abutment is located for engagement with an end (162) of the other of the first and second sections to transmit movement of the first section (124a) in response to depression of the release button (122) to the second section (124b), and that when the coupling member (152) is in the inoperative position, the abutment (160) is positioned so that it is does not engage the end (162) of the other of the first (124a) and second (124b) sections of the pushrod when the first section (124a) is moved in response to the release button (122) being depressed.

7. A handbrake assembly (110) as claimed in claim 5 or claim 6, wherein the coupling member (152) has an arcuate shroud portion (164) which overlies and grips an end region (162) of the other of the first (124a) and second (124b) sections of the pushrod when the coupling member (152) is in the operative position.

8. A handbrake assembly (110) as claimed in any one of claims 5 to 7, wherein the coupling member (152) is aligned substantially in-line between the first (124a) and second (124b) sections of the pushrod when in the operative position, an end of the coupling member (152) being displaced out of line with at least one of the first (124a) and second (124b) sections of the pushrod when it is in the inoperative position.

9. A handbrake assembly (110) as claimed in any one of claims 5 to 8, wherein the assembly comprises a resilient bias member (156) for biasing the coupling member (152) to the operative position, the actuator comprising a solenoid (154) for generating a magnetic field to draw the coupling member (152) to the inoperative position when the solenoid (154) is energised.

10. A handbrake assembly (210) as claimed in claim 4, wherein the coupling member (252) is rotatably mounted to one of the first (224a) and second (224b) sections of the pushrod, the coupling member (252) and the other of the first (224a) and second (224b) pushrod sections having corresponding abutment formations (276, 278) configured such that in at least one rotational orientation of the coupling member (252) the corresponding abutment formations (276, 278) are aligned for engagement to transmit movement of the first pushrod section (224a) in response to depression of the release button (222) to the second pushrod section (224b), and that in at least one other rotational orientation of the coupling member (252) the corresponding abutment formations (276, 278) are offset so as not to engage when the first pushrod section (224a) moves in response to depression of the release button (222).

11. A handbrake assembly (210) as claimed in claim 10, wherein the actuator comprises a stepper motor (272) operatively connected with the coupling member (252) to rotate the coupling member between at least one operative position in which the corresponding abutment formations (276, 278) are aligned for engagement and at least one inoperative position in which the corresponding abutment formations (276, 278) are not aligned for engagement.

12. A handbrake assembly (210) as claimed in claim 11, wherein the stepper motor (272) is mounted in a sleeve (274) affixed to an end region of said one of the first (224a) and second (224b) pushrod sections, a free end of the sleeve (274) slidably overlapping an end region of the other of the first (224a) and second (224b) pushrod sections, the coupling member (252) being mounted to an output shaft of the stepper motor (272).

13. A handbrake assembly (210) as claimed in any one of claims 10 to 12, wherein the coupling member (252) and the other of the first and second sections (224a, 224b) have opposed end faces, the corresponding abutment formations (276, 278) comprising a plurality of abutments equi-spaced about a common pitch circle diameter on each of the opposed end faces, recesses (280) being defined in each of the opposed end faces between adjacent pairs of abutments (278) for receiving the abutments (276) on the other opposed end face when the coupling member (252) is in an inoperative position and the first section (224a) is moved in response to the release button (222) being depressed.

14. A vehicle having a handbrake assembly (110, 210) according to any one of claims 1 to 13.

15. A vehicle as claimed in claim 14, wherein operation of the actuator (154, 272) is controlled by a control system of the vehicle in accordance with a predetermined logic sequence.

## Patentansprüche

1. Handbremsanordnung (110, 210), umfassend einen Handbremshebel (112, 212), der an einer Halterung (14) für eine Drehbewegung zwischen Bremse-Aus- und Bremse-Ein-Stellung montiert ist, einen Verriegelungsmechanismus (120, 220) zum lösbaren Halten des Handbremshebels in einer Bremse-Ein-Stellung, einen an dem Hebel angebrachten Entriegelungsknopf (122, 222) und ein Gestänge (124, 224) zum Übertragen einer Bewegung des Knopfes, wenn er zu dem Verriegelungsmechanismus gedrückt wird, um das Lösen des Verriegelungsmechanismus zu bewirken;
wobei das Gestänge eine Kupplungsanordnung beinhaltet, die ein Kupplungselement (152, 252) beinhaltet, das zwischen einer Betriebsstellung, in der die Bewegung des Entriegelungsknopfes (122, 222) an den Verriegelungsmechanismus (120, 220) übertragen wird, und einer Ruhestellung, in der die Bewegung des Entriegelungsknopfes nicht an den Verriegelungsmechanismus übertragen wird, beweglich ist;
wobei die Anordnung einen Leistungssteller (154, 272) zum Bewegen des Kupplungselements (152, 252) zwischen der Betriebs- und der Ruhestellung aufweist;
**dadurch gekennzeichnet, dass**:
das Gestänge (124, 224) einen ersten Teil (124a, 224a) und einen zweiten Teil (124b, 224b) umfasst, wobei der erste Teil und der zweite Teil in der Betriebsstellung des Kupplungselements (152, 252) mechanisch gekoppelt, jedoch in der Ruhestellung des Kupplungselements (152, 252) mechanisch entkoppelt sind.

2. Handbremsanordnung (110, 210) nach Anspruch 1, wobei der Entriegelungsknopf (122, 222) beweglich ist, wenn das Kupplungselement (152, 252) in seiner Ruhestellung ist.

3. Handbremsanordnung (110, 210) nach Anspruch 1 oder 2, wobei die Bewegung des Entriegelungsknopfes (122, 222) durch das Kupplungselement (152, 252) an den Verriegelungsmechanismus (120, 220) übertragen wird, wenn das Kupplungselement in seiner Betriebsstellung ist.

4. Handbremsanordnung (110, 210) nach einem der vorhergehenden Ansprüche, wobei das Gestänge (124, 224) eine Druckstange (124a, 124b, 224a, 224b) umfasst, die den Entriegelungsknopf (122, 222) und den Verriegelungsmechanismus (120, 220) mechanisch verbindet, wobei die Druckstange einen ersten Teilabschnitt (124a, 224a) umfasst, der mit dem Entriegelungsknopf (122, 222) verbunden ist, und einen zweiten Teilabschnitt (124b, 224b), der mit dem Verriegelungsmechanismus (120, 220) wirkverbunden ist

5. Handbremsanordnung (110) nach Anspruch 4, wobei das Kupplungselement (152) mit dem ersten (124a) und/oder dem zweiten (124b) Teilabschnitt der Druckstange, für eine Drehbewegung im Verhältnis zu dem ersten (124a) und/oder dem zweiten (124b) Teilabschnitt zwischen Betriebs- und Ruhestellung verbunden ist.

6. Handbremsanordnung (110) nach Anspruch 5, wobei das Kupplungselement (152) Widerlager (160) aufweist, das so konfiguriert ist, dass, wenn sich das Kupplungselement in der Betriebsstellung befindet, das Widerlager zum Eingriff mit einem Ende (162) des anderen des ersten oder des zweiten Teilabschnitts angeordnet ist, um die Bewegung des ersten Teilabschnitts (124a) als Reaktion auf das Drücken des Entriegelungsknopfes (122) auf den zweiten Teilabschnitt (124b) zu übertragen, und dass, wenn das Kupplungselement (152) in der Ruhestellung ist, das Widerlager (160) so positioniert ist, dass es nicht das Ende (162) des anderen des ersten (124a) oder des zweiten (124b) Teilabschnitts der Druckstange in Eingriff nimmt, wenn der erste Teilabschnitt (124a) als Reaktion auf das Drücken des Entriegelungsknopfes (122) bewegt wird.

7. Handbremsanordnung (110) nach Anspruch 5 oder 6, wobei das Kupplungselement (152) einen bogenförmigen Abdeckbereich (164) aufweist, der einen Endbereich (162) des anderen des ersten (124a) oder zweiten (124b) Teilabschnitts der Druckstange überlagert und greift, wenn das Kupplungselement (152) in der Betriebsstellung ist.

8. Handbremsanordnung (110) nach einem der Ansprüche 5 bis 7, wobei das Kupplungselement (152) im Wesentlichen in einer Reihe zwischen dem ersten (124a) und dem zweiten (124b) Teilabschnitt der Druckstange ausgerichtet ist, wenn es in der Betriebsstellung ist, wobei ein Ende des Kupplungselements (152) aus der Reihe mit dem ersten (124a) und/oder dem zweiten (124b) Teilabschnitt der Druckstange versetzt ist, wenn es in der Ruhestellung ist.

9. Handbremsanordnung (110) nach einem der Ansprüche 5 bis 8, wobei die Anordnung ein elastisches Vorspannelement (156) zum Vorspannen des Kupplungselements (152) an die Betriebsstellung umfasst, wobei der Leistungssteller einen Magnetschalter (154) zum Erzeugen eines Magnetfeldes umfasst, um das Kupplungselement (152) an die Ruhestellung zu ziehen, wenn der Magnetschalter (154) unter Strom gesetzt wird.

10. Handbremsanordnung (210) nach Anspruch 4, wobei das Kupplungselement (252) drehbar an dem ersten (224a) und/oder zweiten (224b) Teilabschnitt der Druckstange montiert ist, wobei das Kupplungselement (252) und der andere des ersten (224a) oder zweiten (224b) Druckstangenteilabschnitt jeweilige Widerlagerausbildungen (276, 278) aufweisen, die derart konfiguriert sind, dass in wenigstens einer Drehausrichtung des Kupplungselements (252) die entsprechenden Widerlagerausbildungen (276, 278) zum Eingreifen ausgerichtet sind, um eine Bewegung des ersten Druckstangenteilabschnitts (224a) als Reaktion auf das Drücken des Entriegelungsknopfes (222) auf den zweiten Druckstangenteilabschnitt (224b) zu übertragen, und dass in mindestens einer weiteren Drehausrichtung des Kupplungselements (252) die jeweiligen Widerlagerausbildungen (276, 278) versetzt sind, um nicht einzugreifen, wenn sich der erste Druckstangenteilabschnitt (224a) als Reaktion auf das Drücken des Entriegelungsknopfes (222) bewegt.

11. Handbremsanordnung (210) nach Anspruch 10, wobei der Leistungssteller einen Schrittmotor (272) umfasst, der mit dem Kupplungselement (252) wirkverbunden ist, um das Kupplungselement zwischen mindestens einer Betriebsstellung, in der die jeweiligen Widerlagerausbildungen (276, 278) zum Eingriff ausgerichtet sind, und mindestens einer Ruhestellung, in der die jeweiligen Widerlagerausbildungen (276, 278) nicht zum Eingriff ausgerichtet sind, zu drehen.

12. Handbremsanordnung (210) nach Anspruch 11, wobei der Schrittmotor (272) in einer Hülse (274) montiert ist, die an einem Endbereich des einen ersten (224a) oder zweiten (224b) Druckstangenteilabschnitts befestigt ist, wobei ein freies Ende der Hülse (274) einen Endbereich des anderen des ersten (224a) oder des zweiten (224b) Druckstangenteilabschnitts gleitend überlappt, wobei das Kupplungselement (252) an einer Ausgangswelle des Schrittmotors (272) montiert ist.

13. Handbremsanordnung (210) nach einem der Ansprüche 10 bis 12, wobei das Kupplungselement (252) und der andere des ersten oder des zweiten Teilabschnitts (224a, 224b) gegenüberliegende Stirnflächen aufweisen, wobei die jeweiligen Widerlagerausbildungen (276, 278) mehrere Widerlager umfassen, die um einen gemeinsamen Teilkreisdurchmesser auf jeder der gegenüberliegenden Stirnflächen gleich beabstandet sind, wobei Aussparungen (280) in jeder der gegenüberliegenden Stirnflächen zwischen benachbarten Paare von Widerlagern (278) zur Aufnahme der Widerlager (276) auf der anderen gegenüberliegenden Stirnfläche definiert sind, wenn das Kupplungselement (252) in einer Ruhestellung ist und der erste Teilabschnitt (224a) als Reaktion auf das Drücken des Entriegelungsknopfes (222) bewegt wird.

14. Fahrzeug mit einer Handbremsanordnung (110, 210) nach einem der Ansprüche 1 bis 13.

15. Fahrzeug nach Anspruch 14, wobei der Betrieb des Leistungsstellers (154, 272) durch ein Steuersystem des Fahrzeugs gemäß einer vorbestimmten Logiksequenz gesteuert wird.

## Revendications

1. Ensemble frein à main (110, 210) comprenant un levier de frein à main (112, 212) monté sur un support (14) pour permettre un mouvement de pivotement entre les positions de desserrage et de serrage du frein, un mécanisme de verrouillage (120, 220) permettant de maintenir de façon libérale le levier du frein à main en position de serrage du frein, un bouton de déverrouillage (122, 222) monté sur le levier, et une tringlerie (124, 224) pour transmettre le mouvement du bouton lorsqu'il est enfoncé dans le mécanisme de verrouillage afin de libérer le mécanisme de verrouillage ;
la tringlerie incluant un agencement d'accouplement incluant un élément d'accouplement (152, 252) pouvant être déplacé entre une position active dans laquelle le mouvement du bouton de déverrouillage (122, 222) est transmis au mécanisme de verrouillage (120, 220) et une position inactive dans laquelle le mouvement du bouton de déverrouillage n'est pas transmis au mécanisme de verrouillage ;
l'ensemble ayant un actionneur (154, 272) pour déplacer l'élément d'accouplement (152, 252) entre les positions active et inactive ;
**caractérisé en ce que** :
la tringlerie (124, 224) comprend une première partie (124a, 224a) et une seconde partie (124b, 224b), lesquelles sont couplées mécaniquement dans la position active de l'élément d'accouplement (152, 252), mais sont découplées mécaniquement dans la position inactive de l'élément d'accouplement (152, 252).

2. Ensemble de frein à main (110, 210) selon la revendication 1, dans lequel le bouton de déverrouillage (122, 222) pouvant être déplacé lorsque l'élément d'accouplement (152, 252) est dans sa position inactive.

3. Ensemble de frein à main (110, 210) selon la revendication 1 ou 2, dans lequel le mouvement du bouton de déverrouillage (122, 222) est transmis au mécanisme de verrouillage (120, 220) à travers l'élément d'accouplement (152, 252) lorsque ledit élément d'accouplement est dans sa position active.

4. Ensemble de frein à main (110, 210) selon l'une quelconque des revendications précédentes, dans lequel la tringlerie (124, 224) comprend une tige poussoir (124a, 124b, 224a, 224b) reliant mécaniquement le bouton de déverrouillage (122, 222) et le mécanisme de verrouillage (120, 220), la tige poussoir comprend une première section (124a, 224a) reliée au bouton de déverrouillage (122, 222) et une seconde section (124b, 224b) reliée de manière opérationnelle au mécanisme de verrouillage (120, 220)

5. Ensemble de frein à main (110) selon la revendication 4, dans lequel l'élément d'accouplement (152) est relié à l'une des première (124a) et seconde (124b) sections de la tige poussoir pour un mouvement de pivotement par rapport à l'une des première (124a) et seconde (124b) sections entre les positions active et inactive.

6. Ensemble de frein à main (110) selon la revendication 5, dans lequel l'élément d'accouplement (152) a une butée (160) configurée de sorte que, lorsque l'élément d'accouplement est en position active, la butée est située pour se mettre en prise avec une extrémité (162) de l'autre des première et seconde sections pour transmettre le mouvement de la première section (124a) en réponse à une pression sur le bouton de déverrouillage (122) vers la seconde section (124b), et lorsque l'élément d'accouplement (152) est en position inactive, la butée (160) est positionnée de manière à ne pas engager l'extrémité (162) de l'autre des première (124a) et seconde (124b) sections de la tige poussoir lorsque la première section (124a) est déplacée en réponse à une pression sur le bouton de déverrouillage (122).

7. Ensemble de frein à main (110) selon la revendication 5 ou la revendication 6, dans lequel l'élément d'accouplement (152) a une partie de protection arquée (164) qui recouvre et saisit une région d'extrémité (162) de l'autre de la première (124a) et de la seconde section (124b) de la tige poussoir lorsque l'élément d'accouplement (152) est en position active.

8. Ensemble de frein à main (110) selon l'une quelconque des revendications 5 à 7, dans lequel l'élément d'accouplement (152) est aligné sensiblement en ligne entre les première (124a) et seconde (124b) sections de la tige poussoir en position active, une extrémité de l'élément d'accouplement (152) étant décalée hors de la ligne avec au moins l'une des première (124a) et seconde (124b) sections de la tige poussoir lorsqu'elle est en position inactive.

9. Ensemble de frein à main (110) selon l'une quelconque des revendications 5 à 8, dans lequel l'ensemble comprend un élément de polarisation résilient (156) destiné à polariser l'élément d'accouplement (152) en position active, l'actionneur comprenant un solénoïde (154) pour générer un champ magnétique afin d'attirer l'élément d'accouplement (152) en position inactive lorsque le solénoïde (154) est mis sous tension.

10. Ensemble de frein à main (210) selon la revendication 4, dans lequel l'élément d'accouplement (252) est monté par rotation sur l'une des première (224a) et seconde (224b) sections de la tige poussoir, l'élément d'accouplement (252) et l'autre des première (224a) et seconde (224b) sections de tige poussoir ayant des formations de butée correspondantes (276, 278) configurées de telle sorte que dans au moins une orientation en rotation de l'élément d'accouplement (252), les formations de butée correspondantes (276, 278) soient alignées pour un engagement afin de transmettre le mouvement de la première section de tige poussoir (224a) en réponse à une pression sur le bouton de déverrouillage (222) vers la seconde section de tige poussoir (224b), et que dans au moins une autre orientation en rotation de l'élément d'accouplement (252), les formations de butée correspondantes (276, 278) soient décalées de manière à ne pas s'engager lorsque la première section de tige poussoir (224a) se déplace en réponse à une pression sur le bouton de déverrouillage (222).

11. Ensemble de frein à main (210) selon la revendication 10, dans lequel l'actionneur comprend un moteur pas-à-pas (272) relié de manière opérationnelle à l'élément d'accouplement (252) pour faire tourner l'élément d'accouplement entre au moins une position active dans laquelle les formations de butée correspondantes (276, 278) sont alignées pour l'engagement, et au moins une position inactive dans laquelle les formations de butée correspondantes (276, 278) ne sont pas alignées pour l'engagement.

12. Ensemble de frein à main (210) selon la revendication 11, dans lequel le moteur pas-à-pas (272) est monté dans un manchon (274) fixé à une région d'extrémité de l'une des première (224a) et seconde (224b) sections de tige poussoir, une extrémité libre du manchon (274) recouvrant de manière coulissante une région d'extrémité de l'autre des première (224a) et seconde (224b) sections de tige poussoir, et l'élément d'accouplement (252) étant monté sur un arbre de sortie du moteur pas-à-pas (272).

13. Ensemble de frein à main (210) selon l'une quelconque des revendications 10 à 12, dans lequel l'élément de couplage (252) et l'autre des première et seconde sections (224a, 224b) ont des faces d'extrémité opposées, les formations de butée correspondantes (276, 278) comprenant une pluralité de butées équidistantes autour d'un diamètre de cercle primitif commun sur chacune des faces d'extrémité opposées, des évidements (280) étant définis dans chacune des faces d'extrémité opposées entre des paires adjacentes de butées (278) pour recevoir les butées (276) sur l'autre face d'extrémité opposée lorsque l'élément d'accouplement (252) est dans une position inactive et que la première section (224a) est déplacée en réponse à la pression du bouton de déverrouillage (222).

14. Véhicule ayant un ensemble de frein à main (110, 210) selon l'une quelconque des revendications 1 à 13.

15. Véhicule selon la revendication 14, dans lequel le fonctionnement de l'actionneur (154, 272) est commandé par un système de commande du véhicule conformément à une séquence logique prédéterminée.
